# FASCICULE DE BREVET EUROPEEN

(11) **EP 3 640 147 B1**
(45) Date de publication et mention de la délivrance du brevet: **05.05.2021**
(21) Numéro de dépôt: 19203042.7
(22) Date de dépôt: 14.10.2019
(51) Int. Cl.: B64G 1/22, G01B 3/1003

(54) **DISPOSITIF DEPLOYABLE A METRE-RUBAN A SECTION NON CONSTANTE**
ENTFALTBARE VORRICHTUNG MIT MASSBAND MIT NICHT KONSTANTEM ABSCHNITT
DEPLOYABLE DEVICE WITH TAPE MEASURE WITH NON-CONSTANT SECTION

(30) Priorité: 18.10.2018 FR 1801096
(43) Date de publication de la demande: 22.04.2020
(73) Titulaire: Thales, 92400 Courbevoie (FR)
(72) Inventeur: BAUDASSÉ, Yannick, 06156 CANNES LA BOCCA CEDEX (FR); GUINOT, François, 06156 CANNES LA BOCCA CEDEX (FR); VÉZAIN, Stéphane, 06156 CANNES LA BOCCA CEDEX (FR)
(74) Mandataire: Marks & Clerk France

(56) Documents cités:
- EP-A1- 2 993 131
- EP-A2- 0 319 921
- WO-A1-2015/153824
- CN-A- 106 864 772
- US-A1- 2018 111 703

## Description

La présente invention concerne un dispositif déployable à mètre-ruban à section non constante. Elle s'applique notamment au domaine des équipements spatiaux qui doivent être déployés en orbite et plus particulièrement aux équipements spatiaux pour satellites, tels que des antennes, des générateurs solaires, des instruments. Toutefois, l'invention s'applique à tout autre domaine dans lequel il est souhaitable d'éloigner un objet d'une structure porteuse.

Dans le domaine spatial, les mètre-rubans sont fréquemment utilisés dans le déploiement, voir le document CN 106 864 772 A. En position stockée (ou enroulée), les mètre-rubans sont enroulés autour d'un mandrin. Le déploiement des mètre-rubans est assuré de manière autonome par leur déroulement spontané lorsque le mandrin est libre en rotation. Les mètre-rubans sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée. Les mètre-rubans monostables ont donc une tendance naturelle à se déployer pour se retrouver dans leur état déroulé. Le déploiement des rubans monostables est souvent anarchique et incontrôlé. Les rubans bistables possèdent deux positions naturelles (position enroulée et position déployée) et ne nécessitent pas de maintien en position enroulée lorsque la section est totalement aplatie. Leur déploiement est linéaire et contrôlé.

Lorsque l'on souhaite éloigner l'objet de la structure porteuse, par exemple pour positionner un objet, il faut que les mètre-rubans assurent le maintien de l'objet en configuration enroulée et la rigidité de l'ensemble pendant le déploiement. Or, les mètre-rubans n'ont pas la même raideur suivant l'axe de contrainte. Un effort F appliqué sur la face convexe du mètre-ruban va avoir tendance à faire fléchir le mètre-ruban alors que le même effort appliqué sur la face concave n'aura aucun effet, ce qui pose un problème d'instabilité de la structure flexible dans son état déployé. Pour résoudre ce problème de stabilité de l'état déployé, il est alors nécessaire de sur-dimensionner le mètre-ruban pour qu'il reste stable sous les efforts orbitaux, quels que soient leurs sens d'application.

Ainsi, en configuration stockée, le mètre-ruban doit être le plus compact possible, c'est-à-dire avoir un rayon d'enroulement le plus faible possible. Ce paramètre est donné par les caractéristiques physiques du ruban, généralement, le rayon d'enroulement est sensiblement égal à celui de leur rayon de courbure. En configuration déployée, la meilleure rigidité possible est recherchée, ce qui signifie une section la plus grande et la plus fermée possible associée à un encastrement de l'extrémité du mètre-ruban le plus important possible. Ces solutions ne sont pas optimisées en masse.

L'invention vise à pallier tout ou partie des problèmes cités plus haut en proposant un dispositif déployable comprenant un mètre-ruban, enroulable et déployable, présentant l'avantage d'être peu encombrant, simple à réaliser, présentant une optimisation de la masse du dispositif déployable, et permettant une rigidité et une stabilité du mètre-ruban lorsqu'il est déployé.

A cet effet, l'invention a pour objet un dispositif déployable comprenant un mètre-ruban apte à passer d'une configuration enroulée autour d'un premier axe Z à une configuration déployée selon un deuxième axe X sensiblement perpendiculaire au premier axe Z, le mètre-ruban ayant deux dimensions caractéristiques, une première dimension caractéristique étant la largeur du mètre-ruban selon le premier axe Z, une deuxième dimension caractéristique étant l'épaisseur du mètre-ruban selon un troisième axe Y sensiblement perpendiculaire au premier axe Z et au deuxième axe X, au moins une des deux dimensions caractéristiques ayant une valeur non-constante le long du deuxième axe X.

Selon un exemple non revendiqué, le mètre-ruban a une extrémité libre, et la au moins une des deux dimensions caractéristiques a une valeur non-constante le long du deuxième axe X décroissante vers l'extrémité libre.

Selon l'invention, le mètre-ruban a une extrémité encastrée, et la au moins une des deux dimensions caractéristiques a une valeur non-constante le long du deuxième axe X, croissante et décroissante sur une première portion du mètre-ruban et croissante sur une seconde portion du mètre-ruban vers l'extrémité encastrée.

Avantageusement, le dispositif déployable selon l'invention comprend au moins un renfort local positionné sur le mètre-ruban, s'étendant au moins partiellement selon le premier axe Z et/ou s'étendant au moins partiellement selon le deuxième axe X, préférentiellement.

Une section du mètre ruban peut être une section en forme cylindrique, en forme de U ou en forme dite oméga.

L'invention concerne aussi un satellite comprenant au moins un dispositif déployable tel que précédemment décrit.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un dispositif déployable à mètre-ruban selon l'art antérieur,
- la figure 2 représente un exemple non revendiqué d'un dispositif déployable,
- la figure 3 représente une autre vue de l'exemple du dispositif déployable,
- la figure 4 représente un premier mode de réalisation d'un dispositif déployable à mètre-ruban encastré selon l'invention,
- la figure 5 représente une autre vue du premier mode de réalisation du dispositif déployable selon l'invention,
- la figure 6 représente un autre mode de réalisation d'un mètre-ruban d'un dispositif déployable selon l'invention,
- la figure 7 représente un autre mode de réalisation d'un mètre-ruban d'un dispositif déployable selon l'invention,
- les figures 8, 9 et 10 représentent des variantes de section de mètre-ruban d'un dispositif déployable selon l'invention,
- la figure 11 représente schématiquement un satellite comprenant au moins un dispositif déployable selon l'invention.

Par souci de clarté, les mêmes éléments porteront les mêmes repères dans les différentes figures.

L'invention s'applique à des mètre-rubans monostables ou bistables. La mise en œuvre de mètre-rubans monostables demande un effort de guidage plus important. Les mètre-rubans bistables sont préférés pour l'homogénéité de leur déploiement. De plus, en configuration enroulée, ils restent enroulés et en configuration déployée, ils restent déployés.

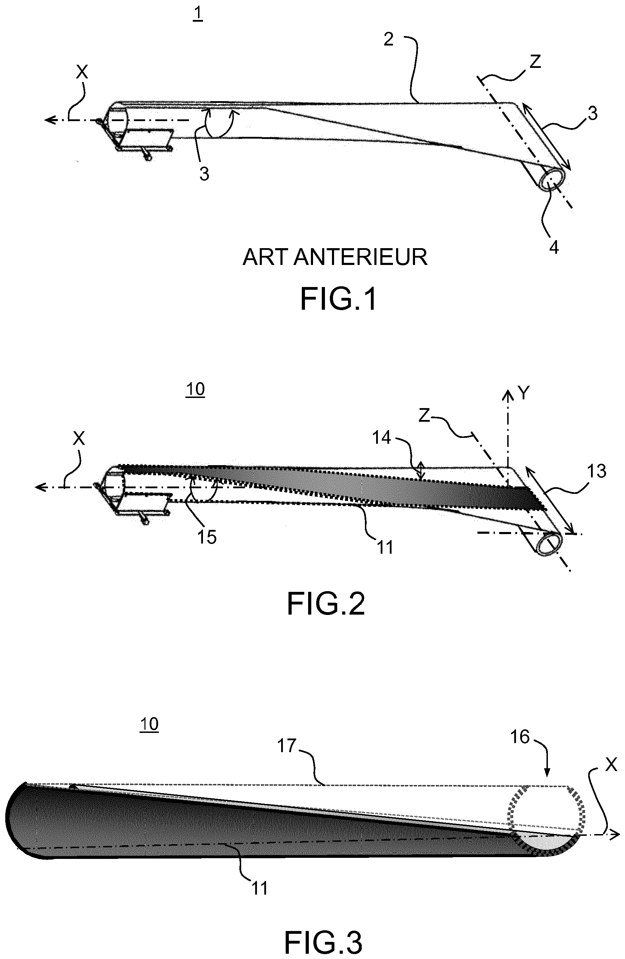

La **figure 1** représente un dispositif déployable 1 à mètre-ruban selon l'art antérieur. Le dispositif déployable 1 comprend un mètre-ruban 2 apte à passer d'une configuration enroulée autour d'un premier axe Z à une configuration déployée selon un deuxième axe X sensiblement perpendiculaire au premier axe Z. La largeur 3 du mètre-ruban est identique tout au long de l'axe X et égale à la largeur 3 du mètre-ruban au niveau de l'enroulement autour du mandrin 4. Cela correspond à la configuration déployée usuelle de l'art antérieur, la meilleure rigidité possible est obtenue par une section la plus grande, la plus épaisse, et la plus fermée possible éventuellement associée à un encastrement de l'extrémité du mètre-ruban.

La **figure 2** représente un exemple d'un dispositif déployable 10. Le dispositif déployable 10 comprend un mètre-ruban 11 apte à passer d'une configuration enroulée autour d'un premier axe Z à une configuration déployée selon un deuxième axe X sensiblement perpendiculaire au premier axe Z. Le mètre-ruban 11 a deux dimensions caractéristiques, une première dimension caractéristique 13 étant la largeur du mètre-ruban 11 selon le premier axe Z, une deuxième dimension caractéristique 14 étant l'épaisseur du mètre-ruban 11 selon un troisième axe Y sensiblement perpendiculaire au premier axe Z et au deuxième axe X. Au moins une des deux dimensions caractéristiques 13, 14 a une valeur non-constante le long du deuxième axe X. En d'autres termes, la largeur du mètre-ruban 11 et/ou l'épaisseur du mètre-ruban 11 est évolutive le long du deuxième axe X. On voit notamment sur la figure 2 que la largeur 13 du mètre-ruban vers son extrémité libre est inférieure à la largeur 13 du mètre-ruban au niveau du mandrin (la représentation de la surface grisée permet de comparer visuellement les largeurs). Cette solution permet un gain de masse considérable, de l'ordre de 30%, par rapport à une solution à section de mètre-ruban constante, tout en garantissant une bonne rigidité du mètre-ruban. Pour dimensionner ce type de structure, on cherche à optimiser le rapport masse/raideur en essayant d'obtenir un taux de contrainte dans le matériau le plus homogène possible. Ce type de résultat peut être obtenu grâce à des procédés d'optimisation topologique qui permettent de trouver la répartition de matière optimale dans un volume donné soumis à des contraintes.

La **figure 3** représente une autre vue de l'exemple du dispositif déployable 10, et plus précisément une vue du mètre-ruban 11 déployé selon le deuxième axe X. Comme expliqué précédemment, le mètre-ruban 11 a une extrémité libre 16, et la au moins une des deux dimensions caractéristiques (ici la largeur) a une valeur non-constante le long du deuxième axe X. Dans l'exemple présenté, la largeur est décroissante vers l'extrémité libre. On voit que pour une largeur de mètre-ruban constante, le mètre-ruban 11 s'étendrait jusqu'à la ligne pointillée 17. Il en résulte un gain en masse.

Grâce à cette optimisation de la section, il est ainsi possible de mettre en œuvre un dispositif de motorisation de plus petite capacité, plus léger et moins encombrant, puisque la section est moins importante sur une grande longueur impliquant un besoin moindre en couple d'enroulement.

Sur le même principe, l'épaisseur 14 du mètre-ruban 11 selon le troisième axe Y peut aussi être évolutive le long du deuxième axe X. Préférentiellement, l'épaisseur 14 du mètre-ruban 11 est plus importante à la base du mètre-ruban 11, c'est-à-dire à proximité du mandrin, et plus fine vers l'extrémité libre. Par exemple, pour un mètre-ruban de 100 mm de diamètre, l'épaisseur peut être de 0.6 mm sur 2 ou 3 mètres de mètre-ruban puis passer à 0,4 mm, pour terminer à 0,3 mm en bout de mètre-ruban. L'épaisseur évolutive permet un gain de masse non négligeable. Pour autant, la rigidité du mètre-ruban est maintenue.

On peut noter que la largeur et/ou l'épaisseur sont croissante et/ou décroissante, de façon linéaire ou non-linéaire. Les profils évolutifs sont préalablement déterminés. Les sections de pied et de tête du mètre-ruban sont définies par des calculs de tenue mécanique du mètre-ruban, notamment avec des procédés d'optimisation comme mentionné précédemment.

Le mètre-ruban étant en fibres de carbone, de verre ou autre, pour faire évoluer l'épaisseur du mètre-ruban, des fibres sont ajoutées ou enlevées selon l'épaisseur souhaitée.

Pour obtenir une largeur évolutive, le mètre-ruban est généralement usiné par commande numérique en fonction des zones sollicitées ou non.

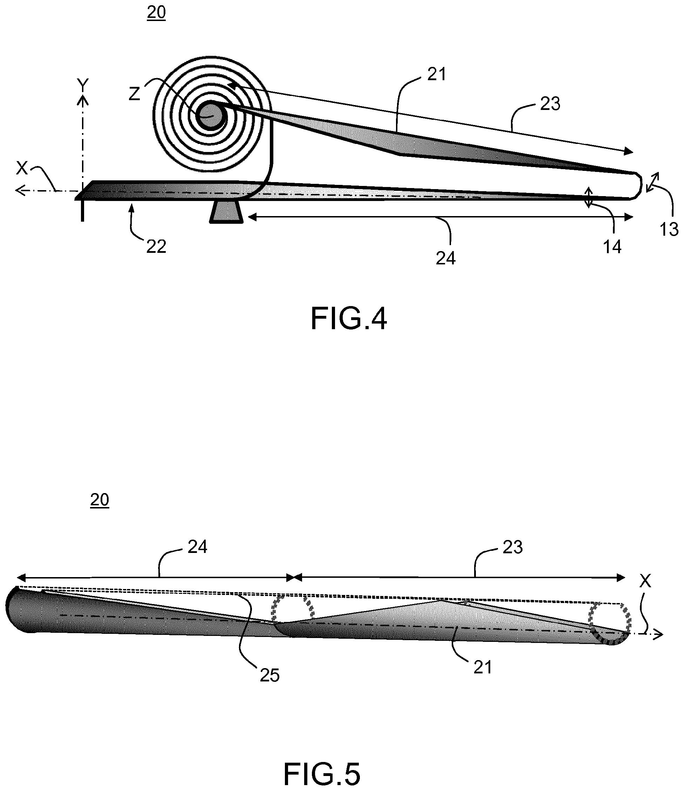

La **figure 4** représente un premier mode de réalisation d'un dispositif déployable 20 à mètre-ruban encastré selon l'invention. Le mètre-ruban 21 a une extrémité encastrée 22. La au moins une des deux dimensions caractéristiques (largeur 13, épaisseur 14) a une valeur non-constante le long du deuxième axe X, croissante et décroissante sur une première portion 23 du mètre-ruban 21 et croissante sur une seconde portion 24 du mètre-ruban 21 vers l'extrémité encastrée 22. On peut noter que l'axe X est à comprendre comme l'axe selon lequel le mètre-ruban s'étend localement en configuration déployée, et s'étendant localement dans une direction sensiblement perpendiculaire à l'axe d'enroulement Z du mètre-ruban.

La **figure 5** représente une autre vue du premier mode de réalisation du dispositif déployable 20 selon l'invention, et plus précisément une vue du mètre-ruban 21 déployé selon le deuxième axe X. Cette représentation met en évidence le profil évolutif de la section, en largeur, du mètre-ruban 21. En comparant avec la ligne pointillée 25 selon laquelle un mètre-ruban de l'art antérieur s'étendrait, le gain en masse est clairement visible.

Il en résulte une optimisation en masse et rigidité du dispositif déployable. Cette optimisation peut permettre, à fréquence en configuration déployée équivalente par rapport à un dispositif de l'art antérieur, de réduire l'épaisseur du mètre-ruban et donc de réduire l'énergie nécessaire à l'enroulement du mètre-ruban.

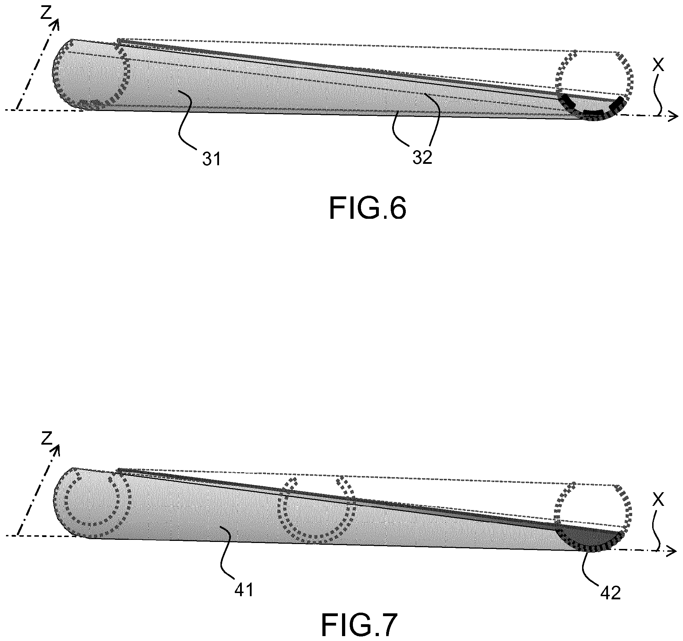

La **figure 6** représente un autre mode de réalisation d'un mètre-ruban 31 d'un dispositif déployable selon l'invention. Dans ce mode de réalisation, le dispositif déployable comprend au moins un renfort local 32 positionné sur le mètre-ruban 31, s'étendant au moins partiellement selon le deuxième axe X. Préférentiellement, le renfort local 32 est positionné tout le long du mètre-ruban 31, au niveau de ses bordures et/ou au centre du mètre-ruban 31. Le renfort 32 permet de renforcer localement le mètre-ruban 31, et ainsi garantir la rigidité souhaitée du mètre-ruban 31.

La **figure 7** représente un autre mode de réalisation d'un mètre-ruban 41 d'un dispositif déployable selon l'invention. Dans ce mode de réalisation, le dispositif déployable comprend au moins un renfort local 42 positionné sur le mètre-ruban 41, s'étendant au moins partiellement selon le premier axe Z. Selon un exemple non revendiqué, le renfort local 42 est positionné au niveau de l'extrémité libre du mètre-ruban 41, mais peut être positionné en d'autres endroits du mètre-ruban 41.

Les renforts locaux 32, 42 sont généralement des bandes de carbone. Il peut s'agir de tissu ou fibre unidirectionnelle (pour les renforts longitudinaux) ou des fibres tissées sur une section principale, ou bien croisées. Les fibres sont ajustées en fonction des contraintes dans le mètre-ruban.

Leur positionnement et leur forme sont liés à la géométrie du mètre-ruban. Ils sont placés là où se trouvent les contraintes, le champ de contraintes étant préalablement déterminé par des outils de modélisation du mètre-ruban. Ainsi, il est assuré que le profil de découpe n'influe pas sur l'intégrité du mètre-ruban, et la rigidité du mètre-ruban est garantie par la présence, si besoin, de renforts locaux.

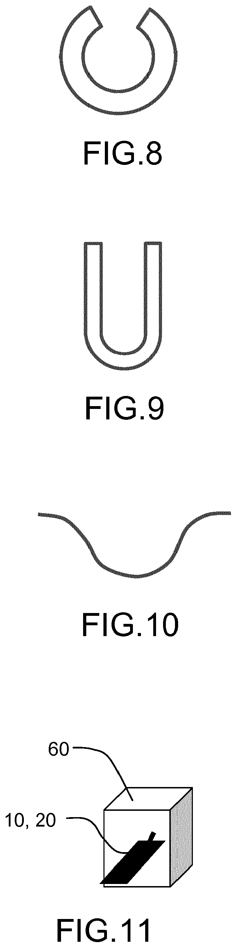

Les **figures 8, 9 et 10** représentent des variantes de section de mètre-ruban d'un dispositif déployable selon l'invention. La figure 8 représente une section dite cylindrique, comme celle qui a été présentée sur les figures précédentes.

Toutefois, la section du mètre-ruban peut être en forme de U, comme représenté sur la figure 9. Dans le cas d'un dispositif déployable mettant en œuvre deux mètre-rubans dans un même plan, la rigidité dans ce plan est obtenue par la présence des deux mètre-rubans. Une section en U des mètre-rubans permet d'apporter une meilleure rigidité dans l'autre plan.

De manière alternative, il est aussi possible de considérer une section dite en « oméga » comme représenté sur la figure 10. Cette section permet également de limiter les frottements sur lui-même à l'entrée du rouleau.

La **figure 11** représente schématiquement un satellite 60 comprenant au moins un dispositif déployable selon l'invention.

## Revendications

1. Dispositif déployable (10, 20) comprenant un mètre-ruban (11, 21, 31, 41) apte à passer d'une configuration enroulée autour d'un premier axe Z à une configuration déployée selon un deuxième axe X sensiblement perpendiculaire au premier axe Z, le mètre-ruban (11, 21, 31, 41) ayant deux dimensions caractéristiques, une première dimension caractéristique étant la largeur (13) du mètre-ruban (11, 21, 31, 41) selon le premier axe Z, une deuxième dimension caractéristique étant l'épaisseur (14) du mètre-ruban (11, 21, 31, 41) selon un troisième axe Y sensiblement perpendiculaire au premier axe Z et au deuxième axe X,
au moins une des deux dimensions caractéristiques ayant une valeur non-constante le long du deuxième axe X,
**caractérisé en ce que** le mètre-ruban (21) a une extrémité encastrée (22), et **en ce que** la au moins une des deux dimensions caractéristiques a une valeur non-constante le long du deuxième axe X, croissante et décroissante sur une première portion (23) du mètre-ruban (21) et croissante sur une seconde portion (24) du mètre-ruban (21) vers l'extrémité encastrée (22).

2. Dispositif déployable (10, 20) selon la revendication 1, **caractérisé en ce qu'**il comprend au moins un renfort local (32, 42) positionné sur le mètre-ruban (31, 41), s'étendant au moins partiellement selon le premier axe Z et/ou s'étendant au moins partiellement selon le deuxième axe X, préférentiellement.

3. Dispositif déployable (10, 20) selon l'une des revendications précédentes, **caractérisé en ce qu'**une section du mètre ruban (11, 21, 31, 41) est une section en forme cylindrique, en forme de U ou en forme dite oméga.

4. Satellite (60) **caractérisé en ce qu'**il comprend au moins un dispositif déployable (10, 20) selon l'une des revendications précédentes.

## Patentansprüche

1. Entfaltbare Vorrichtung (10, 20), umfassend ein Maßband (11, 21, 31, 41), welches in der Lage ist, von einer eingerollten Konfiguration um eine erste Achse Z zu einer entfalteten Konfiguration entlang einer zweiten Achse X überzugehen, welche im Wesentlichen rechtwinklig zur ersten Achse Z ist, wobei das Maßband (11, 21, 31, 41) zwei charakteristische Abmessungen aufweist, wobei eine erste charakteristische Abmessung die Breite (13) des Maßbandes (11, 21, 31, 41) entlang der ersten Achse Z ist, und wobei eine zweite charakteristische Abmessung die Dicke (14) des Maßbandes (11, 21, 31, 41) entlang einer dritten Achse Y ist, welche im Wesentlichen rechtwinklig zur ersten Achse Z und zur zweiten Achse X ist,
wobei mindestens eine der beiden charakteristischen Abmessungen einen nicht konstanten Wert entlang der zweiten Achse X aufweist,
**dadurch gekennzeichnet, dass** das Maßband (21) ein eingelassenes Ende (22) aufweist, und dadurch, dass die mindestens eine der beiden charakteristischen Abmessungen einen nicht konstanten Wert entlang der zweiten Achse X aufweist, welche über einen ersten Abschnitt (23) des Maßbandes (21) zunimmt und abnimmt und über einen zweiten Abschnitt (24) des Maßbandes (21) in Richtung des eingelassenen Endes (22) zunimmt.

2. Entfaltbare Vorrichtung (10, 20) nach Anspruch 1, **dadurch gekennzeichnet, dass** sie mindestens eine lokale Verstärkung (32, 42) umfasst, welche auf dem Maßband (31, 41) positioniert ist, welche sich mindestens teilweise entlang der ersten Achse Z erstreckt und/oder sich vorzugsweise mindestens teilweise entlang der zweiten Achse X erstreckt.

3. Entfaltbare Vorrichtung (10, 20) nach einem der vorhergehenden Ansprüche, **dadurch gekennzeichnet, dass** ein Querschnitt des Maßbandes (11, 21, 31, 41) ein Querschnitt mit zylindrischer Form, mit U-Form oder mit sogenannter Omega-Form ist.

4. Satellit (60), **dadurch gekennzeichnet, dass** er mindestens eine entfaltbare Vorrichtung (10, 20) nach einem der vorhergehenden Ansprüche umfasst.

## Claims

1. Deployable device (10, 20) comprising a tape-spring (11, 21, 31, 41) capable of passing from a wound configuration about a first axis Z to a deployed configuration along a second axis X substantially perpendicular to the first axis Z, the tape-spring (11, 21, 31, 41) having two characteristic dimensions, a first characteristic dimension being the width (13) of the tape-spring (11, 21, 31, 41) along the first axis Z, a second characteristic dimension being the thickness (14) of the tape-spring (11, 21, 31, 41) along a third axis Y substantially perpendicular to the first axis Z and to the second axis X,
at least one of the two characteristic dimensions having a non-constant value along the second axis X,
**characterized in that** the tape-spring (21) has an embedded end (22), and **in that** the at least one of the two characteristic dimensions has a non-constant value along the second axis X, increasing and decreasing over a first portion (23) of the tape-spring (21) and increasing over a second portion (24) of the tape-spring (21) towards the embedded end (22).

2. Deployable device (10, 20) according to claim 1, **characterized in that** it comprises at least one local reinforcement (32, 42) located on the tape-spring (31, 41), extending at least partially along the first axis Z and/or extending at least partially along the second axis X, preferably.

3. Deployable device (10, 20) according to one of the preceding claims, **characterized in that** a cross section of the tape-spring (11, 21, 31, 41) is a cross section of cylindrical form, of U-shaped form or of so called "omega" form.

4. Satellite (60), **characterized in that** it comprises at least one deployable device (10, 20) according to one of the preceding claims.
